(19) Europäisches Patentamt / European Patent Office / Office européen des brevets

(11) **EP 4 625 118 A1**

(12) **DEMANDE DE BREVET EUROPEEN**

(43) Date de publication:
**01.10.2025 Bulletin 2025/40**

(21) Numéro de dépôt: **25165666.6**

(22) Date de dépôt: **24.03.2025**

(51) Classification Internationale des Brevets (IPC):
**G06F 3/01** (2006.01)  **G06F 1/26** (2006.01)
**G06F 1/32** (2019.01)  **G06F 1/3234** (2019.01)

(52) Classification Coopérative des Brevets (CPC):
**G06F 3/016; G06F 1/32; G06F 1/325**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **25.03.2024 FR 2402978**

(71) Demandeur: **Commissariat à l'Energie Atomique et aux Energies Alternatives
75015 Paris (FR)**

(72) Inventeurs:
• **CASSET, Fabrice**
  **38054 GRENOBLE CEDEX 09 (FR)**
• **RASCLE, Angélique**
  **38054 GRENOBLE CEDEX 09 (FR)**
• **PRAT, Christophe**
  **38054 GRENOBLE CEDEX 09 (FR)**
• **GERFAULT, Laurent**
  **38054 GRENOBLE CEDEX 09 (FR)**
• **BRULAIS, Sébastien**
  **38054 GRENOBLE CEDEX 09 (FR)**
• **PERIS Y SABORIT, Laure**
  **38054 GRENOBLE CEDEX 09 (FR)**

(74) Mandataire: **Cabinet Camus Lebkiri
25 rue de Maubeuge
75009 Paris (FR)**

(54) **DISPOSITIF HAPTIQUE MID-AIR AVEC FONCTION DE RÉCUPÉRATION D'ÉNERGIE ET PROCÉDÉ DE FABRICATION DUDIT DISPOSITIF HAPTIQUE**

(57) Un aspect de l'invention concerne un dispositif haptique de type à distance comportant un premier transducteur appelé émetteur configuré pour générer, sous l'effet d'un signal de commande, des ondes ultrasonores reproduisant l'illusion du toucher sur la peau humaine, une partie des ondes ultrasonores se propageant selon une première direction allant de l'émetteur vers une zone cible située à distance du dispositif haptique et une autre partie des ondes ultrasonores se propageant selon une deuxième direction opposée à la première direction,

Ledit dispositif haptique étant caractérisé en ce qu'il comporte en outre :
- Un deuxième transducteur appelé récepteur, configuré pour réceptionner et convertir en un courant électrique les ondes ultrasonores se propageant dans la deuxième direction, l'émetteur étant disposé entre la zone cible et le récepteur,
- Une unité de récupération d'énergie électriquement reliée au récepteur et configurée pour réceptionner le courant électrique produit par le récepteur.

**FIG. 2**

EP 4 625 118 A1

## Description

### DOMAINE TECHNIQUE DE L'INVENTION

La présente invention concerne un dispositif haptique, et en particulier un dispositif haptique comprenant une fonction de récupération d'énergie.

L'invention trouve des applications dans les domaines où les vibrations provoquent des sensations tactiles comme dans le domaine des jeux vidéo, de la réalité augmentée, de l'assistance ou encore le domaine biomédical.

### ARRIERE-PLAN TECHNOLOGIQUE DE L'INVENTION

Il est connu, dans le domaine haptique, de chercher à produire ou reproduire, au moyen d'un dispositif, appelé dispositif haptique, les sensations du toucher ressenties, ou perçues, par un utilisateur.

Parmi les dispositifs haptiques existants, on connait ceux qui procurent les sensations tactiles dans l'air, donc à distance du dispositif haptique. Ces dispositifs, aussi appelés dispositifs « mid-air » en anglais, utilisent généralement un réseau de transducteurs ultrasonores qui génère, sous l'effet d'un signal de commande, un champ acoustique focalisé dans une zone cible de l'air et dont la pression est suffisante pour produire des vibrations ressenties par l'utilisateur.

Ces dispositifs haptiques MID-AIR permettent, par exemple, de simuler le ressenti d'une texture d'un objet virtuel affiché sur un écran lorsque l'utilisateur désigne du doigt, sans toucher l'écran, cet objet virtuel.

Une problématique courante des dispositifs haptiques mid-air formés d'un réseau de transducteurs ultrasonores est que chaque transducteur génère non seulement une onde dans la direction souhaitée (donc, dans l'air), mais aussi une onde dans la direction opposée à la direction souhaitée, car ces transducteurs sont composés de membranes vibrant à une fréquence prédéfinie au-dessus d'une cavité.

Pour résoudre ce problème, le document US2017216887A1 décrit un exemple de dispositif haptique mid-air. Outre le réseau de transducteurs ultrasonores précédemment évoqué, le dispositif décrit dans ce document comporte une couche arrière (ou « backing layer » en anglais) disposée en face arrière du réseau de transducteurs ultrasonores. La face arrière désigne ici la face dirigée du côté opposé à la zone cible de l'air, la zone cible de l'air étant positionnée à l'avant du dispositif haptique. La couche arrière permet d'absorber, et donc de bloquer, les ondes ultrasonores se propageant du côté arrière du réseau de transducteurs. Cela permet d'intégrer ce dispositif haptique dans un système porté par un utilisateur, notamment dans un casque de réalité virtuelle, puisque les ondes ultrasonores se propageant vers l'utilisateur ne sont plus dangereuses pour cet utilisateur (celles-ci étant arrêtées avant d'arriver sur l'utilisateur).

Une autre problématique de ces dispositifs haptiques mid-air, et des dispositifs haptiques en général, est leur consommation d'énergie. En effet, ce point est clé dans les dispositifs haptiques car ils sont très souvent embarqués dans des dispositifs à quantité d'énergie limitée, par exemple fonctionnant sur batterie.

### RESUME DE L'INVENTION

L'invention offre une solution pour réduire la consommation en énergie des dispositifs haptiques mid-air, en permettant de créer un courant électrique à partir des ondes ultrasonores se propageant dans la direction opposée à la zone cible (ainsi ces ondes ultrasonores sont utilisées à bon escient au lieu d'être perdues) et en permettant de réceptionner et de stocker ce courant électrique. Cela permet que ce courant puisse être utilisé comme source d'énergie.

Selon un premier aspect, l'invention concerne un dispositif haptique de type à distance comportant un premier transducteur appelé émetteur configuré pour générer, sous l'effet d'un signal de commande, des ondes ultrasonores reproduisant l'illusion du toucher sur la peau humaine, une partie des ondes ultrasonores se propageant selon une première direction allant de l'émetteur vers une zone cible située à distance du dispositif haptique et une autre partie des ondes ultrasonores se propageant selon une deuxième direction opposée à la première direction, ledit dispositif haptique étant caractérisé en ce qu'il comporte en outre :

- Un deuxième transducteur appelé récepteur, configuré pour réceptionner et convertir en un courant électrique les ondes ultrasonores se propageant dans la deuxième direction, l'émetteur étant disposé entre la zone cible et le récepteur,
- Une unité de récupération d'énergie électriquement reliée au récepteur et configurée pour réceptionner le courant électrique produit par le récepteur.

Ainsi, l'utilisation d'un transducteur configuré pour produire un courant sous l'effet d'ondes ultrasonores (le récepteur) et placé sur la trajectoire des ondes ultrasonores se propageant à l'opposé de la zone cible, soit vers l'arrière de l'émetteur, permet une production d'énergie à partir de ces ondes ultrasonores. Dit autrement, les ondes ultrasonores se propageant vers l'arrière sont désormais rendues fonctionnelles au lieu d'être inutilisées, et donc perdues. Cette caractéristique apporte une amélioration par rapport aux approches de l'art antérieur, puisqu'une énergie (le courant électrique) est désormais produite et réutilisable, notamment par le dispositif haptique.

Outre les caractéristiques qui viennent d'être évoquées dans les paragraphes précédents, le dispositif haptique selon le premier aspect de l'invention peut présenter une ou plusieurs caractéristiques complémentaires parmi les suivantes, considérées individuellement ou selon toutes les combinaisons techniquement possibles.

- Le récepteur est un transducteur d'un même type que l'émetteur, le type étant par exemple un transducteur piézoélectrique ou un transducteur à magnétostriction.

- Le récepteur présente une fréquence de résonance égale à une fréquence de résonance de l'émetteur plus ou moins 500 Hz, de préférence égale à une fréquence de résonance de l'émetteur plus ou moins 50 Hz.

- Ladite fréquence de résonance est supérieure ou égale à 20 kHz, de préférence égale à 100 kHz.

- Le récepteur est séparé de l'émetteur d'une distance inférieure ou égale à 1000 $\mu$m, de préférence inférieure ou égale à 800 $\mu$m, de préférence inférieure ou égale à 500 $\mu$m, ladite distance étant mesurée selon la deuxième direction entre une face arrière de l'émetteur et une face avant du récepteur.

- L'unité de récupération d'énergie est reliée électriquement à l'émetteur et configurée pour injecter le courant électrique produit par le récepteur dans l'émetteur, ledit courant électrique étant utilisé pour produire en partie au moins le signal de commande de l'émetteur.

- Alternativement, l'unité de récupération d'énergie est reliée électriquement à une piste de sortie du dispositif haptique, la piste de sortie étant destinée à être couplée électriquement à une unité d'alimentation extérieure au dispositif haptique.

- Le dispositif haptique comporte en outre une couche protectrice configurée pour atténuer les ondes ultrasonores se propageant dans la deuxième direction, le récepteur étant disposé entre l'émetteur et la couche protectrice.

- L'émetteur est un réseau de transducteurs élémentaires et le récepteur est aussi un réseau de transducteurs élémentaires, chaque transducteur élémentaire du récepteur étant disposé en vis-à-vis de l'un au moins des transducteurs élémentaires de l'émetteur.

Lorsque l'émetteur est un réseau de transducteurs élémentaires et le récepteur est aussi un réseau de transducteurs élémentaires,

- Le réseau de transducteurs élémentaires formant le récepteur présente le même nombre de transducteurs élémentaires que le réseau de transducteurs élémentaires formant l'émetteur, ledit nombre de transducteurs élémentaires étant supérieur à 100, par exemple égal à 139.

- Le réseau de transducteurs élémentaires formant le récepteur présente en vue de dessus une forme identique à une forme du réseau de transducteurs élémentaires formant l'émetteur, ladite forme ayant deux dimensions latérales, chaque dimension latérale étant supérieure ou égale à 2 cm, de préférence supérieure ou égale à 1 cm.

- Chaque transducteur élémentaire est un transducteur ultrasonique piézoélectrique de type micro-usiné aussi appelé PMUT, le réseau de transducteurs élémentaires étant alors un réseau de transducteurs ultrasoniques piézoélectriques micro-usinés aussi appelé réseau PMUT.

Un deuxième aspect de l'invention concerne un procédé de fabrication d'un dispositif haptique de type à distance selon l'une des revendications 1 à 13 comportant les étapes de :

- Fabrication de l'émetteur,

- Fabrication du récepteur,

- Assemblage de l'émetteur et du récepteur de manière qu'en utilisation les ondes ultrasonores réceptionnées et converties par le récepteur sont les ondes ultrasonores générées par l'émetteur se propageant dans la deuxième direction,

- Fourniture de l'unité de récupération d'énergie,

- Réalisation de la connexion électrique entre l'unité de récupération d'énergie et le récepteur.

Selon un mode de réalisation, l'étape de fabrication de l'émetteur comprend les sous-étapes de :

- Fourniture d'un premier substrat,

- Pour chaque PMUT de l'émetteur :

  - Dépôt d'un matériau sacrificiel sur une première face, appelée face arrière, du premier substrat, et formation, dans le matériau sacrificiel, d'une cavité initiale,

  - Dépôt d'une membrane par croissance, par exemple, de silicium polycristallin sur une deuxième face du premier substrat opposée à la première face du deuxième substrat, ladite membrane étant configurée pour fournir une rigidité mécanique au PMUT concerné, une épaisseur de ladite membrane étant dimensionnée pour ajuster une fréquence de résonnance du PMUT concerné,

- Formation du PMUT concerné sur la membrane, comprenant le dépôt d'une première électrode sur la membrane déposée sur la deuxième face du premier substrat, le dépôt d'une couche piézoélectrique sur la première électrode, le dépôt d'une deuxième électrode sur la couche piézoélectrique et la gravure de la deuxième électrode, de la couche piézoélectrique et de la première électrode jusqu'à atteindre ladite membrane, de manière à former des motifs configurés pour acheminer le signal de commande du PMUT concerné,

- Formation de la cavité du PMUT concerné en prolongeant le fond de la cavité initiale jusqu'à la membrane déposée sur la deuxième face du premier substrat,

Et l'étape de fabrication du récepteur comprenant les sous-étapes de :

- Fourniture d'un deuxième substrat,

- Pour chaque PMUT du récepteur :

  - Dépôt d'un matériau sacrificiel sur une première face, appelée face arrière, du deuxième substrat, et formation, dans le matériau sacrificiel, d'une cavité initiale,

  - Dépôt d'une membrane du même matériau que le matériau de la membrane de chaque PMUT de l'émetteur sur une deuxième face du deuxième substrat opposée à la première face du deuxième substrat,

  - Formation du PMUT concerné sur la membrane déposée sur la deuxième face du deuxième substrat, comprenant le dépôt d'une première électrode sur la membrane en polymère, le dépôt d'une couche piézoélectrique sur la première électrode, le dépôt d'une deuxième électrode sur la couche piézoélectrique et la gravure de la deuxième électrode, de la couche piézoélectrique et de la première électrode jusqu'à atteindre ladite membrane, de manière à former des motifs configurés pour acheminer le signal de commande du PMUT concerné,

- Formation de la cavité du PMUT concerné en prolongeant le fond de la cavité initiale jusqu'à la membrane déposée sur la deuxième face du premier substrat.

## BREVE DESCRIPTION DES FIGURES

D'autres avantages et caractéristiques de l'invention apparaîtront à la lecture de la description qui suit, illustrée par les figures dans lesquelles :

La figure représente, sous forme schématique, un exemple de dispositif haptique de type mid-air selon un ou plusieurs modes de réalisation de l'invention,

La figure 2 représente, sous forme schématique, un premier mode de réalisation du dispositif représenté sur la figure 1, permettant de générer un effet haptique complexe et d'améliorer la récupération d'énergie,

La figure 3 représente un exemple en vue de coupe d'une cellule ultrasonore de type PMUT du dispositif représenté sur la figure 2,

La figure 4 représente des résultats de mesure montrant la variation de la pression acoustique générée par un des transducteurs ultrasonores faisant partie du dispositif représenté sur la figure 2 en fonction de la distance à la face avant de ce dispositif,

La figure 5 représente, sous forme schématique, un deuxième mode de réalisation du dispositif représenté sur la figure 1, permettant de protéger un utilisateur contre les effets d'une pression ultrasonore générée à l'arrière du dispositif,

La figure 6 représente un exemple en vue de coupe d'une cellule ultrasonore de type PMUT du dispositif représenté sur la figure 5,

La figure 7 représente, sous forme de logigramme, des étapes d'un procédé de fabrication conforme à l'invention, permettant de fabriquer le dispositif représenté sur la figure 2,

Les figures 8A à 8J représentent, en vue de coupe, des sous-étapes de la première étape du procédé de fabrication représenté sur la figure 7.

## DESCRIPTION DETAILLEE

La présente invention se place dans le domaine des dispositifs haptiques de type à distance, aussi appelés dispositifs haptiques mid-air en anglais, et de leur fabrication. Plus particulièrement, la présente invention vise à améliorer l'efficacité énergétique d'un dispositif haptique mid-air, ce qui permet à ce dispositif de consommer moins d'énergie qu'un dispositif haptique mid-air existant pour un effet haptique rendu identique.

Un dispositif haptique de type à distance ou mid-air, désigne un dispositif générant un effet haptique, c'est-à-dire une sensation du toucher, à distance, donc dans l'air, à l'aide d'ondes ultrasonores qui stimulent la peau.

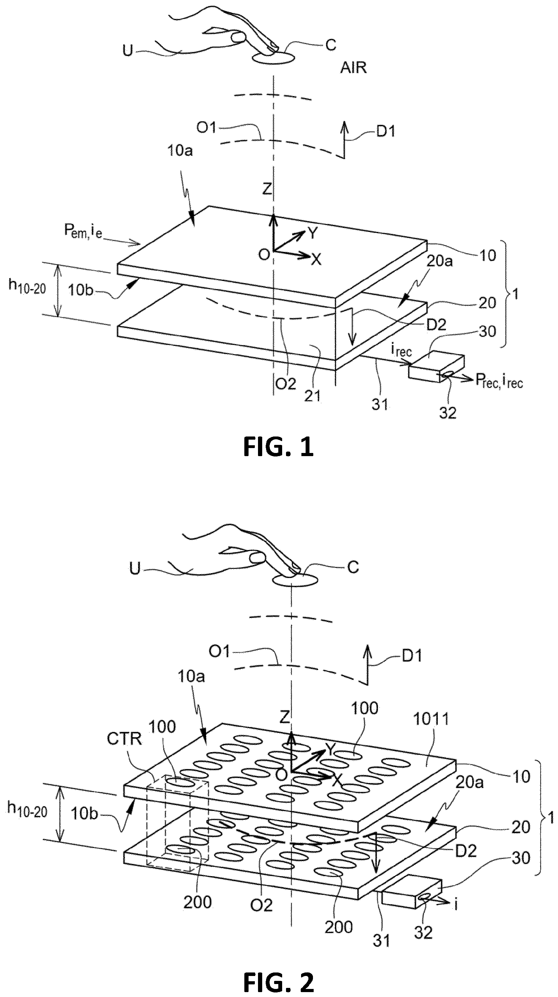

La figure 1 représente, sous forme schématique et en perspective, un exemple de dispositif haptique mid-air, aussi noté « dispositif 1 » par la suite, selon un ou plusieurs modes de réalisation conformes à l'invention. Cette figure 1 illustre également, de manière très schématique, le principe de fonctionnement du dispositif 1.

Comme le montre la figure 1, et de manière commune à tous les modes de réalisation du dispositif 1 présentés par la suite, le dispositif 1 comporte un premier transducteur ultrasonore 10 appelé émetteur 10, un deuxième transducteur ultrasonore 20 appelé récepteur 20, et une unité de récupération d'énergie 30.

Pour faciliter la description, on affecte au dispositif 1 un repère orthonormé OXYZ.

Dans ce repère OXYZ, le plan OXY coïncide avec une face supérieure (sur la figure 1) de l'émetteur 10 du dispositif 1 et l'axe OZ coïncide avec un axe longitudinal du dispositif 1.

Par la suite, les termes « largeur », « longueur », « diamètre » ou encore « dimension latérale » désignent des dimensions mesurées dans un plan parallèle au plan OXY. Les termes « épaisseur » ou « hauteur » désignent des dimensions mesurées selon l'axe OZ.

Sur la figure 1, l'axe OZ est orienté vers le haut de la figure, en direction d'une zone cible C de l'espace d'air AIR situé au-dessus du dispositif 1. En pratique, cet espace d'air AIR est situé à l'avant du dispositif 1.

La face supérieure de l'émetteur 10 est de fait appelée par la suite « face avant 10a de l'émetteur 10 » et constitue une face avant du dispositif 1. En référence à la figure 1, la face de l'émetteur 10 qui est opposée à la face avant 10a de l'émetteur 10 est appelée « face arrière 10b » de l'émetteur 10.

En outre, on considère qu'un élément se situe « à l'arrière » de l'émetteur 10 lorsqu'il est positionné, sur la figure 1, sous l'émetteur 10. A l'inverse, un élément se situe « à l'avant » de l'émetteur 10 (et donc du dispositif 1) lorsqu'il est positionné, sur la figure 1, au-dessus de l'émetteur 10.

Finalement, on appelle première direction D1 la direction allant de l'émetteur 10 vers la zone cible C, donc vers le haut sur la figure 1, et deuxième direction D2 la direction allant de l'émetteur 10 vers la direction opposée à la zone cible C, soit vers le bas, sur la figure 1. En d'autres termes, la première direction D1 est une direction orienté « vers l'avant » du dispositif 1, tandis que la deuxième direction est une direction orientée « vers l'arrière » du dispositif 1.

Comme cela est illustré sur la figure 1, l'émetteur 10 reçoit, en fonctionnement, une puissance électrique $P_{em}$, qui est égale au produit d'une tension d'alimentation (non représentée par les figures) et d'un courant de commande $i_e$. Cette puissance détermine l'énergie consommée par l'émetteur 10.

L'émetteur 10 est de plus configuré pour générer, sous l'effet du signal de commande $i_e$, des ondes ultrasonores O1 et O2 non audibles.

Par « non audibles », on entend une fréquence des ondes ultrasonores O1, O2 strictement supérieure à 20 kHz, de préférence supérieure à 40 kHz et par exemple égale à 100 kHz. Cette fréquence des ondes ultrasonores générées par l'émetteur 10 correspond à la fréquence porteuse ou fréquence de résonance de l'émetteur 10.

Une partie O1 de ces ondes ultrasonores O1, O2, se propage selon la première direction D1, donc vers l'avant du dispositif 1, et est focalisée sur la zone cible C précédemment décrite. La zone cible C se situe alors à une distance de la face avant 10a de l'émetteur 10 comprise entre 10 cm et 40 cm, par exemple égale à 30 cm.

L'émetteur 10 est configuré pour que les ondes ultrasonores O1 génèrent sur la zone cible C une pression acoustique suffisante pour reproduire la sensation de toucher chez un utilisateur U, lorsque celui-ci approche son doigt (comme illustré dans l'exemple de la figure 1) de la zone cible C. La pression acoustique créée par les ondes ultrasonores O1 au point cible C est ainsi au moins égale à 200 Pa. Cette valeur seuil de 200 Pa correspond à la plus petite pression acoustique perceptible.

Comme le montre la figure 1, une autre partie O2 des ondes ultrasonores O1, O2 générées par l'émetteur 10 se propage selon une deuxième direction D2 opposée à la première direction D1, donc vers l'arrière de l'émetteur 10. Ces ondes ultrasonores O2 dirigées vers l'arrière (aussi appelées « ondes ultrasonores arrière O2 » par la suite) ne sont pas fonctionnelles en ce qu'elles ne produisent pas l'effet haptique sur la zone cible C.

Les inventeurs ont identifié qu'il était judicieux d'utiliser ces ondes ultrasonores O2 arrières, conventionnellement inutilisées et donc perdues, pour produire un courant électrique $i_{rec}$ et, donc fournir (ou récupérer), une puissance électrique $P_{rec}$ (et donc une énergie électrique) apte à être consommée par le dispositif 1 lui-même ou un autre dispositif distinct.

Pour cela, le récepteur 20 est un transducteur ultrasonore configuré pour réceptionner les ondes ultrasonores O2 arrières et les convertir en courant $i_{rec}$.

Comme le montre la figure 1, le récepteur 20 est en pratique disposé à l'arrière de l'émetteur 10 (celui-ci étant alors disposé entre la zone cible C et l'émetteur 10), et en vis-à-vis de l'émetteur 10. Le terme « en vis-à-vis » désigne la configuration selon laquelle au moins une partie de l'émetteur 10 et du récepteur 20 se font face.

Ainsi, comme le récepteur 20 est placé sur le trajet des ondes ultrasonores arrières O2 et qu'il est configuré en récepteur d'ondes ultrasonores (et non en émetteur), les ondes ultrasonores arrières O2 sont réceptionnées et converties en un courant électrique, ici le courant $i_{rec}$.

Concrètement, l'émetteur 10 peut être empilé sur le récepteur 20 pour former une structure ultrasonore émissive-réceptive.

De préférence, l'émetteur 10 et le récepteur 20 sont des transducteurs d'un même type, c'est-à-dire que le mode de transduction mis en œuvre par l'émetteur 10 est basé sur le même phénomène physique que celui mis en œuvre par le récepteur 20.

A titre d'exemple (et de manière non limitative), les types de transduction concernés peuvent être des modes de transductions tels que piézoélectrique ou électromagnétique (le phénomène physique est alors un phénomène de magnétostriction).

De préférence, la hauteur, ou distance, $h_{10-20}$ entre l'émetteur 10 et le récepteur 20 est la plus petite possible afin que le récepteur 20 capte la plus grande partie des ondes ultrasonores arrières O2 générées par l'émetteur 10. Pour des raisons d'assemblage, il est acceptable que la pression acoustique que produisent les ondes ultrasonores arrières sur la face avant 20a du récepteur 20 soit au minimum égale ou supérieure à un cinquième de la pression acoustique de ces ondes ultrasonores arrières sur la face arrière de l'émetteur 10. En spécifiant ainsi la hauteur $h_{10-20}$ entre l'émetteur 10 et le récepteur 20, on permet d'augmenter le courant $i_{rec}$ produit par l'émetteur 20, puisque ces ondes ultrasonores arrières sont réceptionnées en étant le moins atténuées possible par l'environnement présent entre l'émetteur 10 et le récepteur 20. Notamment, cela permet qu'au moins 20% de l'énergie consommée par l'émetteur 10 soit récupérée par le récepteur 20.

La fréquence de résonance du récepteur 20 est avantageusement identique à la fréquence de résonance de l'émetteur 10. Cela permet d'optimiser le taux de conversion des ondes ultrasonores O2 en courant $i_{rec}$, puisque la fréquence des ondes ultrasonores arrières coïncide avec la fréquence de résonance du récepteur 20.

Finalement, l'unité de récupération d'énergie 30 est reliée électriquement au récepteur 20 à l'aide d'une connexion électrique 31 et configurée pour réceptionner, via cette connexion électrique 31, le courant $i_{recp}$ généré par le récepteur 20.

La connexion électrique 31 est par exemple une piste métallique.

L'unité de récupération d'énergie comporte en pratique une piste de sortie 32 (par exemple une piste métallique) configurée pour redistribuer le courant $i_{rec}$ reçu et/ou la puissance $P_{rec}$ générée par le récepteur 20. Cela permet que l'énergie électrique générée par le récepteur 20 soit réutilisable, puisque le courant $i_{rec}$ peut être prélevé via la piste de sortie 32.

Selon une variante, la piste de sortie 32 de l'unité de récupération peut être couplée à l'émetteur 10. Cela permet que la puissance $P_{rec}$ générée par le récepteur 20 soit utilisée par l'émetteur 10 comme source de puissance électrique complémentaire. Ainsi, la quantité d'énergie qu'il faut apporter au dispositif 1 pour produire l'effet haptique est réduite. L'efficacité énergétique de ce dispositif 1 est donc améliorée.

Selon une autre variante, non représentée par les figures, la piste de sortie 31 de l'unité de récupération est couplée à une source d'énergie externe au dispositif 1 (autrement dit à une source d'énergie ne faisant pas partie du dispositif 1) pour alimenter en énergie un autre dispositif. Ainsi, le dispositif 1 est producteur d'énergie électrique.

Cette dernière variante est par exemple avantageuse lorsque le dispositif 1 est destiné à être embarqué dans un dispositif portable, par exemple à être intégré dans un casque de réalité virtuelle porté sur la tête de l'utilisateur. En effet, le courant i produit par le dispositif peut servir de signal de commande ou de source d'énergie pour d'autres éléments du casque de réalité virtuelle. Cela permet de limiter la quantité d'énergie qu'il faut apporter au casque de réalité virtuelle pour qu'il fonctionne. L'efficacité énergétique de ce casque est donc améliorée.

La figure 2 représente un premier mode de réalisation du dispositif 1 qui vient d'être décrit de manière générale.

Selon ce premier mode de réalisation et comme cela est illustré en figure 2, l'émetteur 10 est un réseau (ou matrice) de transducteurs ultrasonores élémentaires 100 identiques de type piézoélectriques micro-usinés aussi appelés PMUTs pour « Piezoelectric Micromachined Ultrasonic Transducers » en anglais. De tels réseaux offrent l'avantage d'être commodes à fabriquer en grande densité et permettent, grâce aux dimensions micrométriques des PMUTs, de générer un effet haptique complexe. L'expression « effet haptique complexe » désigne un effet haptique qui est produit, par exemple, en trois dimensions, ou en plusieurs points cibles.

Dans cette configuration, chaque PMUT 100 de l'émetteur 10 est alors configuré pour émettre une partie des ondes ultrasonores avant O1 et une partie des ondes ultrasonores arrières O2 par un effet piézoélectrique direct déclenché sous l'effet de la puissance fournie $P_{em}$ et d'un signal de commande.

Chaque PMUT 100 de l'émetteur 10 peut présenter un diamètre compris entre 30 $\mu$m et 1500 $\mu$m, par exemple un diamètre égal à 800 $\mu$m.

La fréquence de résonance de l'émetteur 10 est, dans ce premier mode de réalisation, déterminée par la fréquence de résonance de chaque PMUT 100 qui le compose. Chaque PMUT 100 de l'émetteur 10 présente une fréquence de résonance supérieure à 40 kHz de manière à générer les ondes ultrasonores O1 et O2. Dans cet exemple, chaque PMUT 100 de l'émetteur 10 présente une fréquence de résonance égale à 100 kHz.

Les PMUTs sont arrangés avec un même premier pas de répétition selon l'axe OX et selon un même deuxième pas de répétition selon l'axe OY.

Ce deuxième pas de répétition peut être égal, ou non, au premier pas de répétition.

Par exemple, le premier et le deuxième pas de répétition peuvent être égaux à 1100 $\mu$m lorsque le diamètre de chaque PMUT est de 800 $\mu$m.

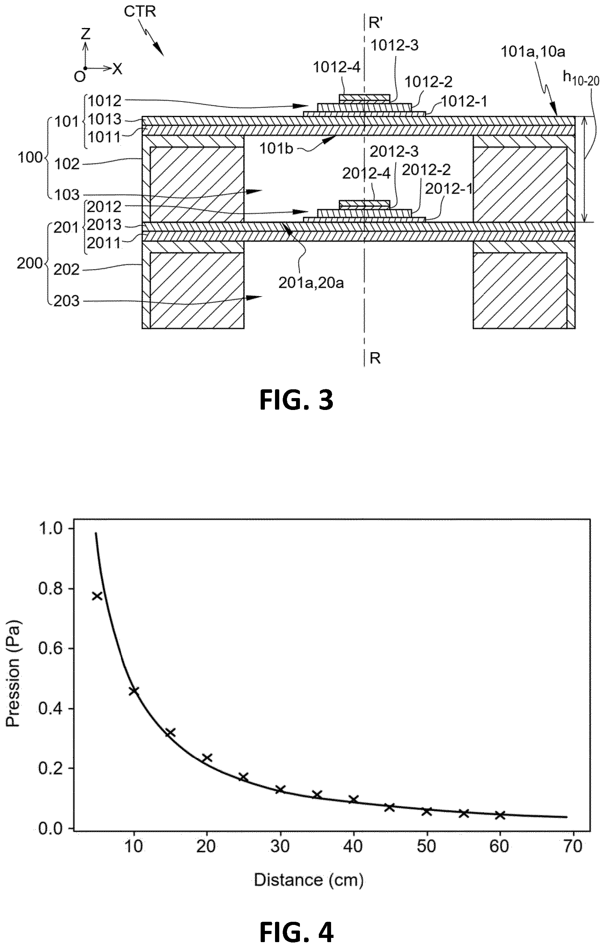

La figure 4 représente des résultats de mesure donnant la pression acoustique, mesurée en pascals (ou Pa), générée par un unique PMUT 100 de l'émetteur 10 en fonction de la distance à ce PMUT. Pour ces mesures, le PMUT 100 est alimenté avec une tension de 5V et présente une fréquence de résonance de 100 kHz.

Comme le montre la figure 4, une pression acoustique de 0,15 Pa est mesurée à 30 cm de distance de l'émetteur 10.

La tension d'alimentation appliquée à l'émetteur 10 (donc au réseau de PMUTs formant l'émetteur 10) est préférentiellement de 48 V. Ainsi, la pression acoustique produite à 30 cm de distance d'un PMUT de l'émetteur est estimée à 1,44 Pa.

Le nombre de PMUT 100 de l'émetteur 10 peut en outre être supérieur à 100, par exemple égal à 139.

Ainsi, pour 139 PMUTs et une tension d'alimentation de l'émetteur 10 fixée à 48 V, la pression acoustique produite à 30 cm de distance de l'émetteur 10 par l'ensemble des PMUTs 100 de l'émetteur 10 est strictement supérieure à 200 Pa, soit au-dessus du seuil produisant l'illusion du toucher sur la peau humaine.

La surface occupée par l'ensemble des PMUTs 100 de l'émetteur 10, appelée « surface active » par la suite, peut être supérieure à 1 cm x 1 cm, par exemple égale à 1,5 cm x 1,5 cm. Ainsi, le dispositif 1 peut être aisément intégré dans des systèmes portés par l'utilisateur, où les contraintes de place sont importantes, tout en conservant une densité de PMUTs suffisante pour créer un effet haptique complexe.

Toujours selon ce premier mode de réalisation, et comme illustré par la figure 2, le récepteur 20 est également un réseau de PMUTs 200.

Chaque PMUT 200 du récepteur 20 est alors configuré pour réceptionner et convertir par un effet piézoélectrique inverse une partie des ondes ultrasonores arrières O2 en un courant élémentaire. Chaque courant élémentaire contribue à former le courant $i_{rec}$ produit par le récepteur 20.

L'utilisation d'un réseau de PMUTs comme récepteur 20 permet d'offrir une grande surface de réception des ondes ultrasonores arrières O2, et donc d'augmenter la sensibilité de détection et de conversion de ces ondes. Plus généralement, l'utilisation de réseaux de PMUTs pour l'émetteur 10 et le récepteur 20 permet d'obtenir un dispositif 1 à la fois plus performant (l'effet haptique généré est plus complexe) et plus efficace énergétiquement (une quantité d'énergie plus grande est récupérée).

Sur la figure 2, le réseau 20 de PMUTs 200 formant le récepteur 20 est ici identique au réseau 10 de PMUTs 100 formant l'émetteur 10 en ce que 1) le nombre de PMUTs 200 y est identique au nombre de PMUTs 100 de l'émetteur 10, 2) le diamètre de chacun de ses PMUT 200 est identique à celui de chaque PMUT 100 de l'émetteur 10, et 3) en ce que ses PMUTs 200 sont arrangés de la même manière (avec les mêmes pas de répétition) selon les axes OX et OY.

On note qu'alors chaque PMUT 200 de l'émetteur 20 est de préférence disposé en face de l'un des PMUTs 100 de l'émetteur 10.

Concrètement, chaque PMUT 200 du récepteur est empilé sous (à l'arrière) du PMUT 100 de l'émetteur correspondant.

La figure 3 représente en vue de coupe un tel empilement (noté CTR sur les figures 2 et 3). Celui-ci présente une forme cylindrique, selon dans cet exemple un même axe longitudinal RR' parallèle à l'axe OZ.

Comme le montre la figure 3, le PMUT 100 de l'émetteur et le PMUT 200 du récepteur correspondant sont identiques dans leur structure et leurs dimensions (diamètre, hauteur). Notamment, ils comportent ici les mêmes éléments et présentent le même design.

De manière connue, chaque PMUT 100, 200 de cet empilement CTR comprend une membrane vibrante circulaire, un support de membrane qui soutient la membrane vibrante et une cavité disposée sous (ou à l'arrière) de la membrane vibrante.

Sur la figure 3, la membrane vibrante, le support de membrane et la cavité du PMUT 100 de l'émetteur 10 sont référencés respectivement avec les numéros 101, 102 et 103. La membrane vibrante, le support de membrane et la cavité du PMUT 200 du récepteur 20 sont référencés respectivement avec les numéros 201, 202 et 203.

La membrane vibrante 101 de l'émetteur 10 est ici configurée pour résonner à une fréquence égale à la fréquence souhaitée pour l'émetteur 10 (donc par exemple une fréquence de 100 kHz) et pour générer une pression acoustique de 1,44 Pa lorsque cet émetteur 10 est alimenté avec une tension de commande de 48 V.

Dans l'exemple de la figure 3, la membrane vibrante 201 du récepteur 20 présente la même épaisseur (en plus du même diamètre) que l'épaisseur du PMUT 100 de l'émetteur 10. La membrane vibrante 201 du récepteur 20 est donc configurée pour résonner à la même fréquence de résonance que la fréquence de résonnance du PMUT 100 de l'émetteur 10 (donc ici 100 kHz). Ainsi, en utilisation, l'onde ultrasonore arrière O2 venant de l'émetteur 10 peut mettre à la résonance la membrane 201 du PMUT 200 du récepteur 20. A la fréquence de résonance, la déformation de la membrane 201 est la plus grande, et donc la récupération du courant $i_{rec}$ est la plus importante.

Naturellement, la membrane vibrante 201 du récepteur 20 peut alternativement présenter une configuration différente de celle du PMUT 100 de l'émetteur 10. Notamment, l'épaisseur et/ou les matériaux constitutifs de la membrane vibrante 201 du PMUT 200 du récepteur 20 peuvent être respectivement différents de l'épaisseur et/ou des matériaux constitutifs de la membrane vibrante 101 du PMUT 100 de l'émetteur 10. Dans une telle configuration, les ondes ultrasonores arrières O2 ont une fréquence différente de la fréquence de résonance des PMUT 201 du récepteur 20. Ces ondes ultrasonores arrières O2 provoquent par voie de conséquence une mobilité moindre de la membrane vibrante 201 de chaque PMUT 200 du récepteur, et donc un courant $i_{rec}$ récupéré plus faible, par rapport au cas où ces ondes ultrasonores arrières O2 ont une fréquence sensiblement égale à la fréquence de résonance des PMUTs 200 du récepteur 20. En contrepartie, les membranes vibrantes 201 de chaque PMUT 200 du récepteur 20, parce qu'elles sont moins mobiles, atténuent les ondes ultrasonores arrières O2. Le récepteur 20 agit alors comme une couche arrière protectrice, puisqu'elle permet de réduire la pression acoustique produite à l'arrière du dispositif 1. Il est alors possible de réduire la distance entre le dispositif 1 et l'utilisateur U lorsque ce dispositif 1 est destiné à être fixé sur cet utilisateur U.

En tout état de cause, même lorsque chaque PMUT 100 de l'émetteur 10 présente une fréquence de résonance sensiblement égale à la fréquence de résonance des PMUTs 200 du récepteur 20, les ondes ultrasonores arrières O2 sont en pratique atténuées lorsqu'elles traversent le récepteur 20 (des pertes ont forcément lieu en pratique à travers le récepteur 20). Cela permet que le récepteur 20 produise à la fois un effet de récupération d'énergie et d'atténuation des ondes ultrasonores O2 générées par l'émetteur 10 et se propageant dans la deuxième direction D2. Cela permet ainsi d'obtenir un dispositif haptique 1 plus efficace énergétiquement que les dispositifs haptiques de l'art antérieur, et plus adapté à être fixé sur un utilisateur (puisque la distance entre cet utilisateur et le dispositif haptique 1 peut être réduite sans occasionner de danger pour l'utilisateur). En effet, dans un tel cas, le récepteur 20 permet, en plus de récupérer de l'énergie, de protéger la face arrière de l'émetteur 10 et d'éviter que les ondes propagées vers l'arrière ne gênent l'utilisateur.

La membrane vibrante 101, 201 de chaque PMUT 100, 200 représenté sur la figure 3 est une structure multicouche : elle comporte successivement, depuis le fond de la cavité correspondante vers le haut (ou l'avant, sur la figure 3), une couche inerte formant une membrane et un motif piézoélectrique configuré pour actionner (faire vibrer) la couche inerte au-dessus de la cavité correspondante.

La couche inerte peut être une structure monocouche ou, comme représenté sur la figure 3, une structure multicouche formée, par exemple, d'une première couche de silicium polycristallin et d'une deuxième couche d'oxyde.

Sur la figure 3, la couche de silicium polycristallin et la couche d'oxyde formant la couche inerte de la membrane vibrante du PMUT 100 de l'émetteur 10 sont respectivement notées 1011 et 1013. Le motif piézoélectrique du PMUT 100 de l'émetteur 10 est noté 1012. La couche de silicium polycristallin et la couche d'oxyde formant la couche inerte de la membrane du PMUT 200 du récepteur 20 sont respectivement notés 2011 et 2013 et le motif piézoélectrique du PMUT 200 du récepteur 20 est noté 2012.

Dans l'exemple de la figure 3, le motif piézoélectrique de chaque PMUT 100, 200 est ici formé d'un motif d'électrode inférieure disposé sur la membrane vibrante, d'un motif d'électrode supérieure et d'un motif d'un matériau piézoélectrique disposé entre le motif d'électrode inférieure et le motif d'électrode supérieure. Finalement, le motif piézoélectrique peut aussi comporter un motif métallique disposé sur le motif d'électrode supérieure.

Sur la figure 3, le motif d'électrode inférieure, le motif de matériau piézoélectrique, le motif d'électrode supérieure et le motif métallique du PMUT 100 de l'émetteur 10 sont notés avec les références respectives 1012-1, 1012-2, 1012-3 et 1012-4. Le motif d'électrode inférieure, le motif de matériau piézoélectrique, le motif d'électrode supérieure et le motif métallique du PMUT 200 du récepteur 200 sont notés avec les références respectives 2012-1, 2012-2, 2012-3 et 2012-4.

La distance $h_{10-20}$ entre le PMUT 100 de l'émetteur 10 et le PMUT 200 du récepteur 20 est ici définie par la hauteur mesurée entre la face arrière 101b de la membrane vibrante 101 du PMUT 100 de l'émetteur 10 et la face avant 201a de la membrane 201 du PMUT 200 du récepteur 20. Cette distance $h_{10-20}$ détermine la distance entre l'émetteur 10 et le récepteur 20, et est préférentiellement comprise entre 400 $\mu$m et 1000 $\mu$m, de préférence égale à 500 $\mu$m.

La distance $h_{10-20}$ ainsi spécifiée est la distance minimale entre l'émetteur 10 et le récepteur 20 compatible avec les contraintes technologiques de fabrication couramment employées dans les technologies des semiconducteurs (notamment celles concernant l'assemblage, ou le report, de substrats). Cela permet que le dispositif 1 puisse être effectivement fabriqué, et que celui-ci présente une capacité améliorée de récupération d'énergie (plus la distance $h_{10-20}$ est petite, moins les ondes ultrasonores arrières O2 sont atténuées lorsqu'elles arrivent sur le récepteur 20 et plus la récupération d'énergie est grande)

La puissance *P*, exprimée en Pascal Pa, produite par un PMUT 100 de l'émetteur 10 peut être estimée à l'aide de la formule (F1) détaillée ci-après.

[Maths 1] (F1)

$$P = \frac{\sqrt{2.\pi.\rho.S.\varepsilon.f^2}}{r}$$

Où :

- $\rho$ est la densité d'air en Kg/m$^{-1}$ présent en surface de la membrane du PMUT considéré,

- *S* est la surface en m$^2$ de la membrane du PMUT considéré,

- $\varepsilon$ est l'amplitude en m de la vibration produite par la membrane du PMUT,

- $f$ est la fréquence de vibration en Hz de la membrane du PMUT considéré, et

- $r$ est la distance en m à la membrane du PMUT.

Pour un PMUT 100 de l'émetteur 10 considéré dans les paragraphes précédents et r = 0,0001 m, on peut calculer une pression acoustique $P_{10}$ de l'ordre de 700 Pa à la surface 101a de la membrane vibrante 101 du PMUT 100 de l'émetteur 10.

Comme les deux membranes 101 et 102 du PMUT 100 de l'émetteur et du PMUT 200 du récepteur 20 sont empilées l'une sur l'autre et sont ici distantes de $h_{10-20}$ égale à 500 μm, on calcule une pression acoustique $P_{20}$ sur la membrane 201 du récepteur 10 de l'ordre de 140 Pa, donc inférieure d'un facteur 5 à celle générée sur la membrane 101 du PMUT 100 de l'émetteur 10.

La pression acoustique arrivant à la membrane 201 du récepteur 20 déforme cette dernière 5 fois moins que la déformation de la membrane ayant généré cette pression acoustique. Par effet piézoélectrique direct, on peut ainsi estimer que l'on peut récupérer, à l'aide du récepteur 20, environ 20 % de l'énergie qui a été utilisée pour l'actionnement de l'émetteur 10. Notons que ce n'est qu'un ordre de grandeur et que l'on peut optimiser la récupération d'énergie en minimisant la distance $h_{10-20}$ entre les membranes 101 et 102 du PMUT 100 de l'émetteur et du PMUT 200 du récepteur 20.

Naturellement, le récepteur 20 peut être, dans d'autres modes de réalisation, un réseau de PMUTs 200 ayant une configuration différente de celle du réseau de PMUT 100 formant l'émetteur 10 : par exemple, le nombre de PMUTs 200 peut être différent et/ou le diamètre de chaque PMUT 200 du récepteur 20 peut être supérieur au diamètre du PMUT 100 correspondant de l'émetteur 10 (dans ce cas, chaque PMUT 200 du récepteur peut être actionné par plusieurs PMUT 100 de l'émetteur 10).

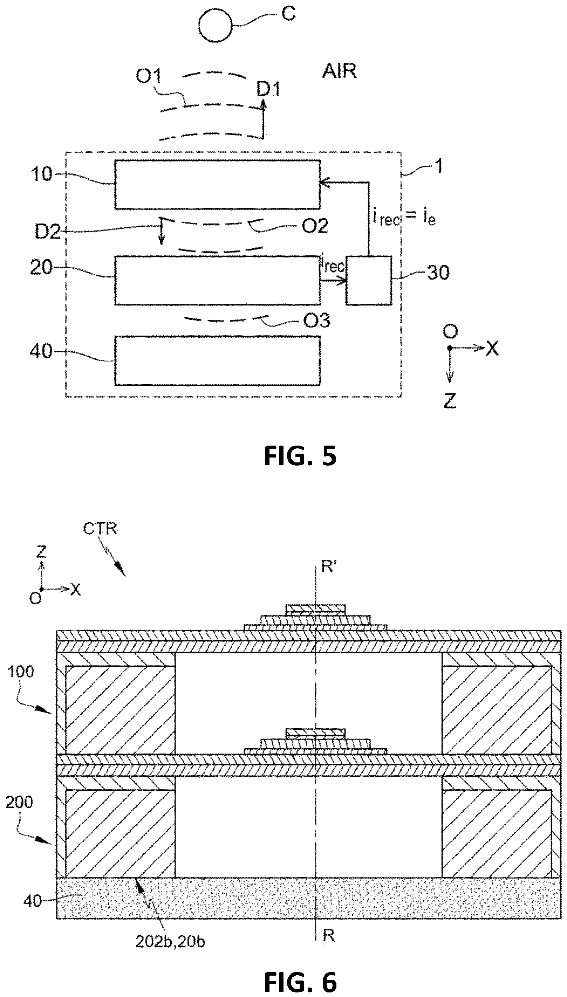

Un deuxième mode de réalisation est représenté sous forme schématique par la figure 5.

Selon ce deuxième mode de réalisation, le dispositif 1 comporte en outre une couche protectrice 40.

Comme le montre la figure 5, la couche protectrice 40 est disposée à l'arrière du récepteur 20, et de préférence contre ce récepteur 20. Le récepteur 20 est alors disposé entre l'émetteur 10 et la couche protectrice 40.

La couche protectrice 40 est une couche inerte (par opposition à l'émetteur 10 et au récepteur 20 qui sont des transducteurs, donc des couches actives) formée d'un métamatériau ou de tout autre matériau ayant une impédance acoustique apte à absorber les ondes ultrasonores se propageant dans la deuxième direction D2.

Plus précisément, la couche protectrice 40 est configurée pour atténuer l'amplitude des ondes ultrasonores arrières O2, O3 à un niveau ne produisant pas d'effets dangereux pour l'utilisateur. Idéalement, la couche protectrice 40 est configurée pour bloquer totalement la pression acoustique générée par les ondes ultrasonores arrières. A minima, la couche protectrice 40 est configurée pour laisser passer une pression acoustique de quelques dizaines de Pascals, de préférence de quelques Pascals, par exemple 5 Pa.

Dit autrement, la couche protectrice 40 est une couche inerte configurée pour que la pression acoustique produite par les ondes ultrasonores transmises à travers cette couche protectrice 40 soit strictement inférieure au seuil au-dessus duquel un effet haptique est produit.

Les ondes ultrasonores transmises concernées sont les ondes ultrasonores O2 arrières ayant traversé le récepteur 20 et/ou les ondes ultrasonores O3 ayant été générées par ce récepteur 20. En pratique, en effet, la mise en vibration de la membrane 201 de chaque PMUT 200 du récepteur 20 induit une génération d'ondes ultrasonores O3 vers l'arrière, donc vers l'utilisateur U. On note que plus la fréquence des ondes ultrasonores arrières O2 (et donc la fréquence de résonance des PMUT 100 de l'émetteur 10) est proche de la fréquence de résonance de chaque PMUT 200 du récepteur 20, moins les ondes ultrasonores arrières O2 sont atténuées, puisque la membrane vibrante 201 correspondante est rendue plus mobile.

Le deuxième mode de réalisation illustré en figure 5 est compatible avec le premier mode de réalisation, comme cela est illustré en figure 6.

La figure 6 montre ainsi une vue de coupe de l'empilement CTR représenté sur la figure 3 lorsque la couche protectrice 40 est présente. La couche protectrice 40 est disposée contre la face arrière 202b du support de membrane 202 du PMUT 200 du récepteur 20.

Ce deuxième mode de réalisation est particulièrement avantageux lorsque le dispositif 1 est destiné à être porté sur la tête de l'utilisateur U. En effet, la couche protectrice 40 permet de s'assurer que les ondes ultrasonores résiduelles se propageant à l'arrière du dispositif 1, donc vers l'utilisateur U, ne sont pas nocives pour cet utilisateur. Cela évite de devoir éloigner, pour respecter des conditions de sécurité de l'utilisateur U, le dispositif 1 de l'utilisateur U.

Un procédé de fabrication conforme à l'invention, permettant de fabriquer le dispositif 1 illustré en figure 2 est décrit ci-après.

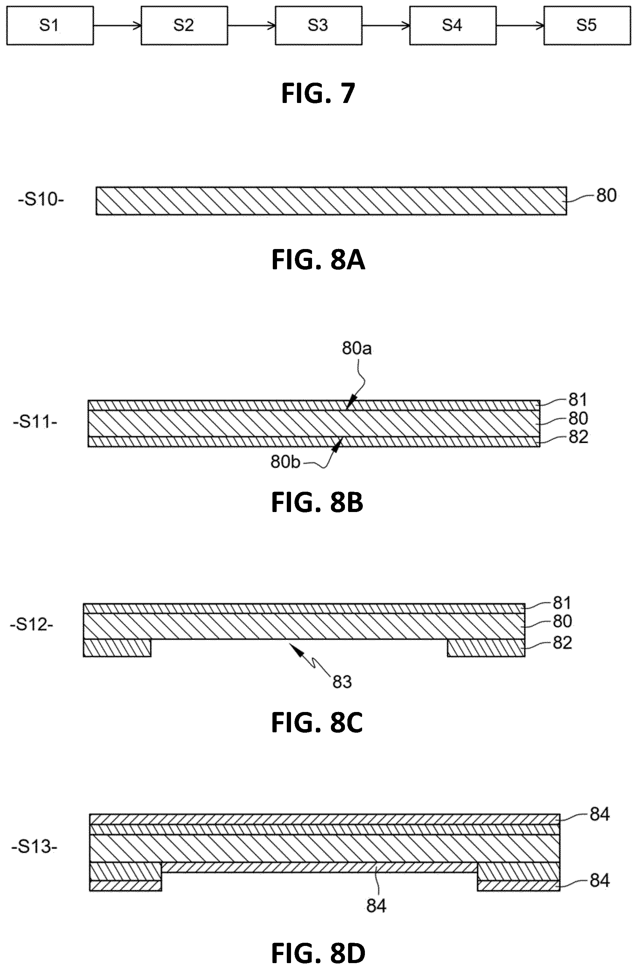

La figure 7 représente, sous forme de logigramme, les principales étapes du procédé de fabrication (aussi noté « procédé » par la suite).

Comme le montre la figure 7, le procédé comprend les étapes de :

- Fabrication S1 de l'émetteur 10,

- Fabrication S2 du récepteur 20,

- Assemblage S3 de l'émetteur 10 et du récepteur 20 de manière qu'en utilisation les ondes ultrasonores réceptionnées et converties par le récepteur 20 sont les ondes ultrasonores O2 générées par l'émetteur se propageant dans la deuxième direction,

- Fourniture S4 de l'unité de récupération d'énergie 30, et

- Réalisation S5 de la connexion électrique entre l'unité de récupération d'énergie 30 et le récepteur 20.

Les figures 8A à 8J représentent en vue de coupe des sous-étapes de l'étape S1 de fabrication de l'émetteur 10. On rappelle que cet émetteur 10 est constitué d'un réseau de PMUT 100.

Lors de la sous-étape S10, illustrée en figure 8A, un substrat 80 est fourni. Ce substrat 80 est par exemple un substrat en silicium, issu d'une plaquette (ou wafer) de silicium.

Lors de la sous-étape S11, illustrée en figure 8B, une couche supérieure d'oxyde 81 est déposée sur la face avant 80a du substrat 80 et une couche inférieure d'oxyde 82 est déposée sur la face arrière 80b du substrat 80. Ces couches d'oxyde supérieure et inférieure 81, 82 sont destinées à former, avec le substrat 80 un support de membrane commun à tous les PMUTs 100 de l'émetteur 10.

A la sous-étape S12, illustrée en figure 8C, une gravure de la couche inférieure d'oxyde 82 est réalisée jusqu'à atteindre la face arrière 10b du substrat 80 de manière à créer une cavité initiale 83.

Lors de la sous-étape S13 illustrée en figure 8D, une membrane en silicium polycristallin 84 est déposée sur la couche d'oxyde supérieure 81 (formant ainsi la couche inerte de la membrane vibrante 101 des PMUT 100), au fond de la cavité initiale 83 et sur la face arrière de la couche d'oxyde 82 inférieure. Le dépôt de la membrane 84 peut alors être réalisé selon une technique de croissance de silicium polycristallin sur la couche d'oxyde supérieure 81, au fond de la cavité initiale 83 et sur la face arrière de la couche d'oxyde 82 inférieure.

La membrane en polymère 84 déposée sur la face supérieure de la couche d'oxyde supérieure 81 forme la couche inerte 1011 d'une membrane vibrante 101 commune à tous les PMUT 100 de l'émetteur 10.

Selon une variante, la membrane 84 peut être formée de plusieurs couches déposées successivement sur le premier substrat 80, dont une couche d'oxyde de silicium par exemple de 1,9 $\mu$m d'épaisseur et de polysilicium (par exemple de 4 $\mu$m d'épaisseur). D'autres matériaux peuvent alternativement être envisagés, à base de silicium monocristallin, ou de nitrure de silicium.

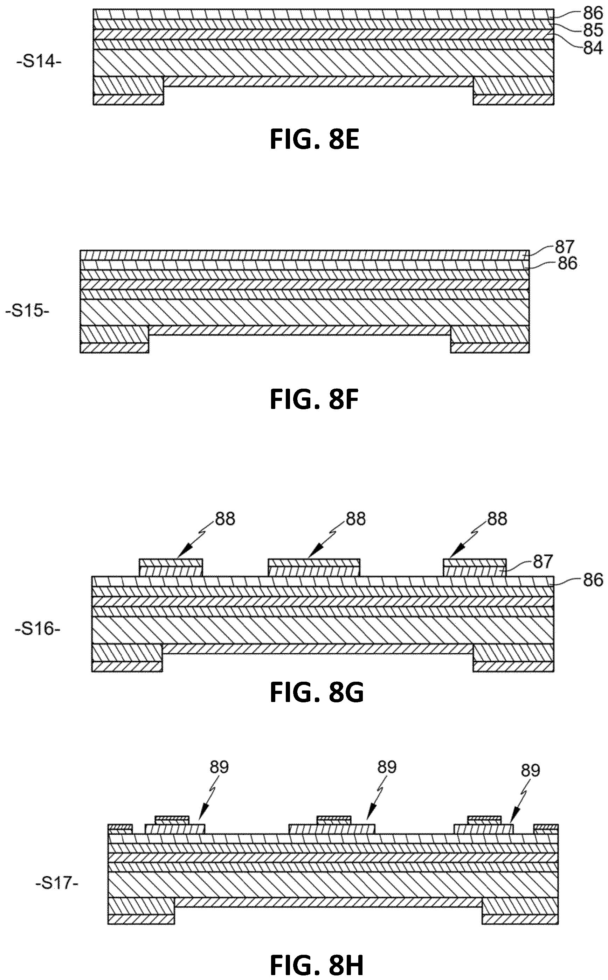

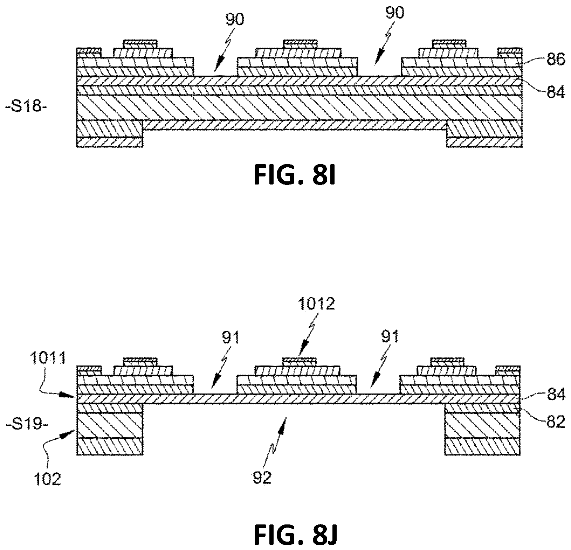

Ensuite, lors des sous-étapes S14 à S18, représentées respectivement sur les figures 8E, 8F, 8G, 8H et 8I, le motif piézoélectrique 1012 de chaque PMUT 100 de l'émetteur 10 est formé.

Lors de la sous-étape S14 illustrée en figure 8E, une couche métallique inférieure 86 du matériau du motif d'électrode inférieure 1012-1 (de chaque motif piézoélectrique) est déposée sur la couche d'oxyde supérieure 85 selon une technique de dépôt pleine plaque. La couche métallique supérieure 86 est par exemple formée de platine ou Pt et présente une épaisseur de 100 nm.

Ensuite, à la sous-étape S15 illustrée en figure 8F, une couche 87 du matériau du motif piézoélectrique 1012-2 est formée sur la couche métallique inférieure 86, selon une technique de dépôt pleine plaque. Le matériau piézoélectrique peut être choisi (de manière non limitative) parmi les matériaux suivants : titano-zirconate de plomb PZT, nitrure d'aluminium ou AlN, oxyde de Zinc ou ZnO. L'épaisseur de la couche 87 du matériau du motif piézoélectrique 1012-2 peut être de 2 $\mu$m.

Lors de la sous-étape S16 illustrée en figure 8G, une couche métallique supérieure 88 du matériau du motif d'électrode supérieure 1012-3 est déposée sur la couche 87 du matériau du motif piézoélectrique 1012-2. La couche métallique supérieure 88 peut être formée d'une sous-couche inférieure à base de ruthénium (Ru) d'épaisseur 100 nm et d'une sous-couche supérieure à base d'or (Au) d'épaisseur 500 nm.

Une première gravure est ensuite réalisée, lors de la sous-étape S17 illustrée en figure 8H, à travers la couche métallique supérieure 88 et une deuxième gravure est réalisée à travers la couche 87 du matériau du motif piézoélectrique 1012-2 jusqu'à atteindre la couche métallique inférieure 86, de manière à créer des motifs 88 piézoélectriques initiaux à partir desquels les motifs piézoélectriques finaux 1012 seront formés.

Lors de la sous-étape S18, illustrée en figure 8I, une troisième gravure est réalisée entre les motifs 88 piézoélectriques initiaux et à travers la couche métallique inférieure 86 jusqu'à atteindre la membrane 84, de manière à former les motifs piézoélectriques finaux 1012 de chaque PMUT 100 de l'émetteur 10.

Finalement, lors de la sous-étape S19, illustrée en figure 8J, une gravure est réalisée à travers la couche d'oxyde inférieure 82 accessible depuis la cavité initiale 83, jusqu'à atteindre la membrane 84. Ainsi, la cavité de chaque PMUT est formée sous la membrane 84.

Selon une variante, la sous-étape S19 n'est pas réalisée. Ainsi, la membrane du PMUT 100 est formée de la couche de silicium polycristallin 84 et de la couche d'oxyde inférieure et supérieure 82, 81.

L'étape S2 de fabrication du récepteur 20 est identique à l'étape S1 en ce qu'elle comprend les mêmes sous-étapes.

## Revendications

1. Dispositif haptique (1) de type à distance comportant un premier transducteur (10) appelé émetteur (10) configuré pour générer, sous l'effet d'un signal de commande ($i_e$), des ondes ultrasonores (O1, O2) reproduisant l'illusion du toucher sur la peau humaine, une partie (O1) des ondes ultrasonores (O1, O2) se propageant selon une première direction (D1) allant de l'émetteur (10) vers une zone cible (C)

située à distance du dispositif haptique (1) et une autre partie (O2) des ondes ultrasonores (01,02) se propageant selon une deuxième direction (D2) opposée à la première direction (D1),

Ledit dispositif haptique (1) étant **caractérisé en ce qu'**il comporte en outre :

- Un deuxième transducteur (20) appelé récepteur (20), configuré pour réceptionner et convertir en un courant électrique ($i_{rec}$) les ondes ultrasonores (O2) se propageant dans la deuxième direction (D2), l'émetteur (10) étant disposé entre la zone cible (C) et le récepteur (20),
- Une unité de récupération d'énergie (30) électriquement reliée au récepteur (20) et configurée pour réceptionner le courant électrique ($i_{rec}$) produit par le récepteur (20).

2. Dispositif haptique (1) selon la revendication 1, dans lequel le récepteur (20) est un transducteur d'un même type que l'émetteur (10), le type étant par exemple un transducteur piézoélectrique ou un transducteur à magnétostriction.

3. Dispositif haptique (1) selon la revendication 1 ou 2, dans lequel le récepteur (20) présente une fréquence de résonance égale à une fréquence de résonance de l'émetteur (10) plus ou moins 500 Hz, de préférence égale à une fréquence de résonance de l'émetteur (10) plus ou moins 50 Hz.

4. Dispositif haptique (1) selon la revendication 3, dans lequel ladite fréquence de résonance est supérieure ou égale à 20 kHz, de préférence égale à 100 kHz.

5. Dispositif haptique (1) selon l'une des revendications 1 à 4, dans lequel le récepteur (20) est séparé de l'émetteur (10) d'une distance ($h_{10-20}$) inférieure ou égale à 1000 $\mu$m, de préférence inférieure ou égale à 800 $\mu$m, de préférence inférieure ou égale à 500 $\mu$m, ladite distance ($h_{10-20}$) étant mesurée selon la deuxième direction (D2) entre une face arrière (10b) de l'émetteur et une face avant (20a) du récepteur (20).

6. Dispositif haptique (1) selon l'une des revendications 1 à 5, dans lequel l'unité de récupération d'énergie (30) est reliée électriquement à l'émetteur (10) et configurée pour injecter le courant électrique ($i_{rec}$) produit par le récepteur (20) dans l'émetteur (10), ledit courant électrique ($i_{rec}$) étant utilisé pour produire en partie au moins le signal de commande ($i_e$) de l'émetteur (10).

7. Dispositif haptique (1) selon l'une des revendications 1 à 5, dans lequel l'unité de récupération d'énergie (30) est reliée électriquement à une piste de sortie (32) du dispositif haptique (1), la piste de sortie (32) étant destinée à être couplée électriquement à une unité d'alimentation extérieure au dispositif haptique.

8. Dispositif haptique (1) selon l'une des revendications 1 à 7, dans lequel le dispositif haptique (1) comporte en outre une couche protectrice (40) configurée pour atténuer les ondes ultrasonores (O2, O3) se propageant dans la deuxième direction, le récepteur (20) étant disposé entre l'émetteur (10) et la couche protectrice (40).

9. Dispositif haptique (1) selon l'une des revendications 1 à 8, dans lequel l'émetteur (10) est un réseau de transducteurs élémentaires et le récepteur est aussi un réseau de transducteurs élémentaires, chaque transducteur élémentaire du récepteur étant disposé en vis-à-vis de l'un au moins des transducteurs élémentaires de l'émetteur.

10. Dispositif haptique (1) selon la revendication 9, dans lequel le réseau de transducteurs élémentaires formant le récepteur présente le même nombre de transducteurs élémentaires que le réseau de transducteurs élémentaires formant l'émetteur, ledit nombre de transducteurs élémentaires étant supérieur à 100, par exemple égal à 139.

11. Dispositif haptique (1) selon l'une des revendications 9 ou 10, dans lequel le réseau de transducteurs élémentaires formant le récepteur présente en vue de dessus une forme identique à une forme du réseau de transducteurs élémentaires formant l'émetteur, ladite forme ayant deux dimensions latérales, chaque dimension latérale étant supérieure ou égale à 2 cm, de préférence supérieure ou égale à 1 cm.

12. Dispositif haptique (1) selon l'une des revendications 9 à 11, dans lequel chaque transducteur élémentaire est un transducteur ultrasonique piézoélectrique de type micro-usiné aussi appelé PMUT, le réseau de transducteurs élémentaires étant alors un réseau de transducteurs ultrasoniques piézoélectriques micro-usinés aussi appelé réseau PMUT.

13. Procédé de fabrication d'un dispositif haptique de type à distance selon l'une des revendications 1 à 12 comportant les étapes de :

- Fabrication (S1) de l'émetteur (10),
- Fabrication (S2) du récepteur (20),
- Assemblage (S3) de l'émetteur (10) et du récepteur (20) de manière qu'en utilisation les ondes ultrasonores réceptionnées et converties par le récepteur (20) sont les ondes ultrasonores (O2) générées par l'émetteur (10) se propageant dans la deuxième direction (D2),

- Fourniture (S4) de l'unité de récupération d'énergie (30),
- Réalisation (S5) de la connexion électrique entre l'unité de récupération d'énergie (30) et le récepteur (20).

**FIG. 1**

**FIG. 2**

**FIG. 3**

**FIG. 4**

EP 4 625 118 A1

**FIG. 5**

**FIG. 6**

S1 → S2 → S3 → S4 → S5

**FIG. 7**

-S10- ⟨80⟩

**FIG. 8A**

80a

-S11- ⟨81 / 80 / 82⟩

80b

**FIG. 8B**

-S12- ⟨81 / 80 / 82⟩

83

**FIG. 8C**

-S13- ⟨84 / 84 / 84⟩

**FIG. 8D**

FIG. 8E

-S14-

FIG. 8F

-S15-

FIG. 8G

-S16-

FIG. 8H

-S17-

**FIG. 8I**

**FIG. 8J**

EP 4 625 118 A1

| | Europäisches Patentamt<br>European Patent Office<br>Office européen des brevets | **RAPPORT DE RECHERCHE EUROPEENNE** | **Numéro de la demande**<br>EP 25 16 5666 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 4 006 698 A1 (COMMISSARIAT ENERGIE ATOMIQUE [FR]) 1 juin 2022 (2022-06-01)<br>* alinéa [0009] - alinéa [0035] *<br>* alinéa [0040] - alinéa [0044]; figure 1 *<br>* alinéa [0064] - alinéa [0075]; figures 7,8 *<br>- - - - - | 1-13 | INV.<br>G06F3/01<br>G06F1/26<br>G06F1/32<br>G06F1/3234 |
| A | US 2019/189889 A1 (BENEDICT ROBERTA DILEO [US] ET AL) 20 juin 2019 (2019-06-20)<br>* alinéa [0084] *<br>* alinéa [0250] *<br>* alinéa [0254] - alinéa [0257]; figure 36 *<br>- - - - - | 1-13 | |
| A | WO 2019/207143 A1 (MYVOX AB [SE]) 31 octobre 2019 (2019-10-31)<br>* page 7, ligne 7 - page 9, ligne 27; figures 1a-1c, 2, 6 *<br>- - - - - | 1-13 | |
| A | EP 3 734 421 A1 (COMMISSARIAT ENERGIE ATOMIQUE [FR]) 4 novembre 2020 (2020-11-04)<br>* alinéa [0056]; figure 4 *<br>- - - - - | 8 | **DOMAINES TECHNIQUES RECHERCHES (IPC)**<br><br>G06F |
| A | CN 109 150 011 A (UNIV NANJING POSTS & TELECOMMUNICATIONS) 4 janvier 2019 (2019-01-04)<br>* le document en entier *<br>- - - - - | 1-13 | |

Le présent rapport a été établi pour toutes les revendications

| Lieu de la recherche | Date d'achèvement de la recherche | Examinateur |
|---|---|---|
| Berlin | 26 juin 2025 | Mouton, Benjamin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

19

## ANNEXE AU RAPPORT DE RECHERCHE EUROPEENNE
## RELATIF A LA DEMANDE DE BREVET EUROPEEN NO.

EP 25 16 5666

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-06-2025

| Document brevet cité au rapport de recherche | | Date de publication | Membre(s) de la famille de brevet(s) | | Date de publication |
|---|---|---|---|---|---|
| EP 4006698 | A1 | 01-06-2022 | CN | 114546181 A | 27-05-2022 |
| | | | EP | 4006698 A1 | 01-06-2022 |
| | | | FR | 3116630 A1 | 27-05-2022 |
| | | | US | 2022164043 A1 | 26-05-2022 |
| US 2019189889 | A1 | 20-06-2019 | AUCUN | | |
| WO 2019207143 | A1 | 31-10-2019 | EP | 3600696 A1 | 05-02-2020 |
| | | | SE | 1850519 A1 | 28-10-2019 |
| | | | US | 2021162457 A1 | 03-06-2021 |
| | | | WO | 2019207143 A1 | 31-10-2019 |
| EP 3734421 | A1 | 04-11-2020 | CN | 111552412 A | 18-08-2020 |
| | | | EP | 3734421 A1 | 04-11-2020 |
| | | | FR | 3092680 A1 | 14-08-2020 |
| | | | US | 2020257366 A1 | 13-08-2020 |
| CN 109150011 | A | 04-01-2019 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017216887 A1